# EUROPEAN PATENT SPECIFICATION

(11) **EP 2 850 846 B1**
(45) Date of publication and mention of the grant of the patent: **06.07.2016**
(21) Application number: 12721181.1
(22) Date of filing: 15.05.2012
(51) Int. Cl.: H04Q 3/00, H04W 24/00

(54) **RADIO ACCESS BEARER MONITORING**
ÜBERWACHUNG EINES FUNKZUGRIFFSTRÄGERS
SURVEILLANCE DE SUPPORT D'ACCÈS RADIO

(43) Date of publication of application: 25.03.2015
(73) Proprietor: Telefonaktiebolaget LM Ericsson (publ), 164 83 Stockholm (SE)
(72) Inventor: BÁDER, Attila, H-2071 Paty (HU)
(74) Representative: von Zmuda-Trzebiatowski, Margarethe
(86) International application number: PCT/EP2012/002086
(87) International publication number: WO 2013/170865

(56) References cited:
- WO-A1-2010/140931
- US-A1- 2006 246 844
- XIAOWAN KE ET AL: "WCDMA KPI framework definition methods and applications", COMPUTER ENGINEERING AND TECHNOLOGY (ICCET), 2010 2ND INTERNATIONAL CONFERENCE ON, IEEE, PISCATAWAY, NJ, USA, 16 April 2010 (2010-04-16), pages V4-471, XP031689685, ISBN: 978-1-4244-6347-3

## Description

### Technical Field

The present disclosure generally relates to Radio Access Bearer (RAB) monitoring. Specifically, a technique for generating reports for at least one RAB is described. In one scenario the report is compared to at least one Key Performance Indicator (KPI).

### Background

RABs are logical channels of a Radio Access Network (RAN) connecting a User Equipment (UE) with a Core Network (CN). Different RABs are specified by 3^{rd} Generation Partnership Project (3GPP) in Universal Mobile Telecommunications System (UMTS) networks for efficiently carrying different type of user traffic. An example can be found in WO 2010/140931.

Each RAB type has different transmission characteristics (such as in terms of data rate, grade of service and Quality of Service (QoS) requirements). RABs are set up and terminated dynamically on demand in the RAN. The user traffic is distributed among the different RAB types based on the transmission requirement and the available resources in the RAN and in the transport network. The RABs may also be changed during a session, for example due to radio resources, radio environment, change in the transmitted traffic, handover, or there being any system problem associated with the used RAB. There may be specific RABs for signaling traffic called Signaling Radio Bearers (SRBs).

The UE may use more than one RAB at a time. In an active state, the UE is connected to the network with at least one uplink (UL) and one downlink (DL) RAB. UL and DL RAB types can be different allowing different services on the UL or DL. There may be multiple RABs (or multi-RABs) active in one of the UL or DL, for example when a UE runs more sessions in parallel.

There may also be parallel RAB types that can be different allowing, for example, different services on the DL for the UE. As an example, a file may be downloaded in a packet switched RAB, while a speech call is performed in a conversational (e.g., circuit-switched) RAB at the same time. Multi-RAB services have become more and more common as smart phones and tablets spread on the market. The RAB combinations that can be used by the UE are generally called user equipment radio connections (UeRcs), wherein certain possible UeRcs are specified by 3GPP. The RAB combinations can consist of single or multi-RABs. The number of the RAB combinations, including multi-RAB, is increasing in UMTS Terrestrial Radio Access Network (UTRAN) release-by-release; currently there are approximately 200 UeRc types.

Proper operation of UeRcs and transitions between UeRc states is essential for the operation of mobile networks, and introduction of a new UeRc state may require a verification process. The UeRcs are usually licensed features and operators would like to be sure about the proper operation of UeRcs as well as about the achievable benefit of using new UeRcs.

Performance Monitoring (PM) and assurance is a functionality of the Operating Support System (OSS) or Network Management system (NMS). PM is usually based on internal and external (protocol) events and statistical counters provided by network nodes. The PM system is collecting the PM (statistical and event) data, and the data are used for monitoring, optimization, assurance and troubleshooting applications and features.

However, current network management and test systems are not tailored for RAB monitoring and there are no PM functions for detailed multi-RAB monitoring and assurance. It has thus been found that the current systems have at least one of the following limitations.

NMS systems are capable of monitoring higher-level network KPIs. However, they do not provide detailed information per UeRcs and per UeRc transitions. No automatic centralized tools or solutions are available for multi-RAB verification. Test cases and test verification systems cover one, or a few user sessions only, and they are not suitable for network-wide and continuous monitoring. Verification test cases are not monitored or reproduced during network operation, and discrepancies from test operations are neither monitored nor reported. A deductive troubleshooting approach (so-called troubleshooting drill down) is possible for a few users only, since there are no network-wide solutions for RAB/Multi-RAB troubleshooting. For test systems, several entities are needed for the monitoring, such as protocol analyzers, active probes and passive probes, which require, inter alia, installation, special knowledge, and manual (maintenance) work. Moreover, these methods are limited to open interfaces and monitoring protocol events (no internal events can be considered). Furthermore, RAB/multi-RAB monitoring is not correlated or cannot be correlated with other PM data and network KPIs.

Further background art is described in the international application WO 2010/140931 A1.

### Summary

Accordingly, there is a need for an implementation of a scheme that avoids one or more of the problems discussed above, or other problems.

A method for generating reports for at least one Radio Access Bearer (RAB) according to independent claim 1 and a method for comparing a report to at least one Key Performance Indicator according to independent claim 5 as well as a network entity for generating reports for at least one RAB according to independent claim 11 and a network entity for comparing a report to at least one Key Performance Indicator according to independent claim 13 are provided.

In a first aspect, there is provided a method of generating reports for at least one Radio Access Bearer (RAB) of a Radio Access Network (RAN), wherein the following items are pre-identified: i) at least one User Equipment Radio Connection (UeRc) ii) a state of the UeRc, and iii) at least one transition to or from the state, the method being performed in an RAB analyzer and comprising the steps of receiving at least one event provided by a network node of the radio access network, determining whether the event coincides with at least one of the pre-identified items, and generating, based on the result of the determination, a report indicating occurrence or non-occurrence of the event.

The present technique may be provided a centralized solution implemented in a network measurement system, and the solution may be based on measurements provided by network nodes. Hence, no active or passive probes may be needed. Moreover, the solution may provide a tool for monitoring and ensuring proper operation of multi-RABs, which are important and used most extensively by premium users.

In a refinement of the first aspect, the method may comprise transmitting the generated report. Moreover, the determining may be performed only for relevant (internal or external) performance management events. The relevant performance management events may be comprised in a use case or irrelevant events may not be comprised in a use case, wherein the use case may comprise a plurality of the states and of the transitions both attributable to a typical user behaviour. Thus, monitoring may be based on use cases, and the results may also be displayed per use cases. In this way, the performance management results are directly related to user experience. At the same time, the solution can reveal system failures and configuration problems.

The relevant or irrelevant events may be determined based on filtering the events according to at least one of a source UeRc and a target UeRc. Accordingly, only the relevant events and statistics may be processed and stored which allows a scalable implementation, and thus, the solution is suitable for network-wide monitoring.

In another refinement of the first aspect, the method may further comprise the following offline steps: identifying the items, and specifying a state machine for a use case, wherein the use case comprises a plurality of the states and of the transitions both attributable to a typical user behaviour. In the first refinement, the method may further comprise configuring a new use case by introducing a new UeRc associated with the new use case, performing, in a test environment, a number of test use cases, and comparing results of the test use cases to a desired output. In other words, the solution may be based on monitoring of transitions between different UeRcs, thus enabling operators (such as troubleshooting engineers) to identify and localize a fault or any system related error more easily. The solution can be used in a test environment for verifying introduction of new UeRc-s into the network.

In a second aspect, there is provided a method of comparing a report to at least one KPI on at least one RAB between a UE and a Radio Access Network (RAN), the method being performed in a Performance Management (PM) functionality and comprising the steps of transmitting at least one event provided by a network node of the network, receiving, responsive to the transmitting, a report indicating occurrence or non-occurrence of the event, and comparing the report to the at least one KPI.

In a refinement of the second aspect, the method may further comprise collecting the at least one internal or external event from the RAN. Moreover, the KPI may be at least one of a downlink throughput, an uplink throughput, a signal level, an interference level and a speech quality indicator.

In a first refinement of either one or both of the first and second aspects, the event may be one of an RAB setup, an RAB loss, an RAB setup failure, an RAB termination, a soft handover and a hard handover.

In a second refinement of either one or both of the first and second aspects, the report may be generated or received per one of a cell, the UeRc, the transition, and a use case, wherein the use case comprises a plurality of the states and of the transitions both attributable to a typical user behaviour.

In a third refinement of either one or both of the first and second aspects, the step of generating or receiving the report may further comprise one of generating or receiving the report in real-time, and generating or receiving the report every time interval, wherein the report indicates aggregated occurrence or non-occurrence of the event.

In a fourth refinement of either one or both of the first and second aspects, the step of transmitting or receiving the at least one event may further comprise one of transmitting or receiving the at least one event in real-time, and transmitting or receiving, every time interval, a file comprising aggregated events.

In a fifth refinement of either one or both of the first and second aspects, the event may be one of an RAB loss and an RAB setup failure, and wherein the report may further comprise a cause code identifying the cause of RAB loss or RAB setup failure. If so, the method may be performed per cell, and the method may further comprise ranking the cells according to the respective cells having thrown the cause code or not, and performing the method again, only with respect to those cells having thrown the cause code, per UeRc, per transition and per a use case, wherein the use case comprises a plurality of the states and of the transitions both attributable to a typical user behaviour.

It is to be noted that the first to fifth refinements of the first and second aspects may bring about at least one of the advantages discussed herein for the first aspect. In addition, the performance measurement results of the real network may be compared with test cases, which are measured in a test lab or in controlled conditions. The discrepancy between the test and real network measurements can be identified. In this way, the proper operation of the network for the monitored use cases is ensured.

It is to be noted that a network entity (or several entities) may implement any of the technical details set forth for the method aspects herein, and thus achieve the same advantages. In other words, the network entity (or entities) may comprise components adapted to perform any of the method steps disclosed herein. There is also provided a network system comprising one or more of such entities.

In a third aspect, the network system may comprise a RAB analyzer according to the first aspect, a PM functionality according to the second aspect, and a Domain Management Server (DMS), wherein the RAB analyzer may be configured to fetch network topology information comprising the at least one state and the at least one transition from the DMS, and wherein internal or external events are sent to the RAB analyzer directly or via the DMS.

### Brief Description of the Drawings

Embodiments of the technique presented herein are described herein below with reference to the accompanying drawings, in which:
- Fig. 1: shows a network system employing an exemplary device embodiment of the present invention;
- Fig. 2: shows the components comprised in the exemplary device embodiment realized in the form of a PM functionality and an RA analyzer;
- Fig. 3: shows a method embodiment which also reflects the interaction between the components of the device embodiment;
- Fig. 4: shows a first exemplary embodiment of a UeRc state machine comprising a multi-RAB state to be tested;
- Fig. 5: shows possible failure cases and related transitions in the first exemplary embodiment of Fig. 4; and
- Fig. 6: shows an effect of the first exemplary embodiment on a KPI (here: DL throughput) over time.

### Detailed Description

In the following description, for purposes of explanation and not limitation, specific details are set forth (such as particular signalling steps) in order to provide a thorough understanding of the technique presented herein. It will be apparent to one skilled in the art that the present technique may be practised in other embodiments that depart from these specific details. For example, the embodiments will primarily be described in the context of a 3GPP Wideband Code Division Multiple Access (WCDMA)-type communication system; however, this does not rule out the use of the present technique in any other 3GPP or non-3GPP communication systems.

Moreover, those skilled in the art will appreciate that the services, functions and steps explained herein may be implemented using software functioning in conjunction with a programmed microprocessor, or using an Application Specific Integrated Circuit (ASIC), a Digital Signal Processor (DSP) or general purpose computer. It will also be appreciated that while the following embodiments are described in the context of methods and devices, the technique presented herein may also be embodied in a computer program product as well as in a system comprising a computer processor and a memory coupled to the processor, wherein the memory is encoded with one or more programs that execute the services, functions and steps disclosed herein.

The technique presented herein provides a session monitoring and verification method and system for mobile networks. The technique can be implemented in a Network Management System (NMS). It can be used to verify new RABs and RAB combinations, and it may also be used for assuring the proper operation of the new and existing RABs and RAB combinations. In this context, a network management or assurance system may be connected to a test network or to a real operating radio network. An RAB Analyzer (RA) as presented herein may be implemented in an NMS. In turn, the RA may use node/network internal and external (protocol) performance management events and/or configuration data that are available in the domain manager as input.

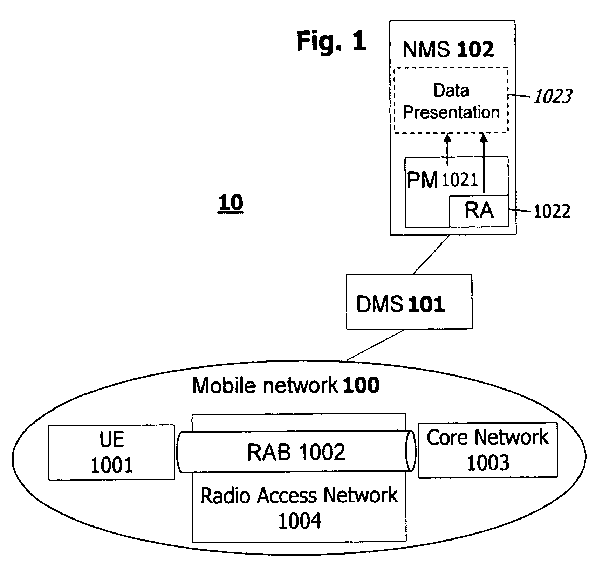

Fig. 1 shows a network system employing an exemplary device embodiment of the present disclosure. The network system 10 comprises a mobile network 100 with Radio Access (RA) functionality, a DMS 101 and an NMS 102. The DMS 101 may be (functionally) interposed between the mobile network 100 and the NMS 102. In turn, the NMS 102 comprises a PM functionality 1021, an RAB analyzer 1022 and an optional data presentation function 1023. In addition, the mobile network 100 comprises a UE 1001, the (or at least one) RAB 1002, a core network 1003 and a RAN 1004. As shown, the RAB 1002 may be part of the RAN 1004.

Accordingly, the RA 1022 may fetch network topology information from the DMS 101. From PM or other events that are monitored by the RA 1022 may be activated in the network nodes for the selected cells or for selected nodes through the DMS 101. The activated events may be sent in real-time by the network nodes to the RA 1022 through the DMS 101 or directly to the RA 1022. Optionally, the (PM) events may be collected in files, which may be fetched from the DMS 101 regularly and processed by the RA 1022.

As will be detailed herein below, use cases may be defined in the RA 1022, which use cases can be based on a possible or (preferably) a typical user behavior. An exemplary use case may be described as follows: the user starts watching a video on his/her mobile terminal. In the mean-time, he/she answers a voice call, and then starts a web browsing session, terminates the web browsing, and finally stops watching the video.

Use cases may also include mobility cases, for example when the user is traveling by car or by train while using services. The use cases may be special or artificial use cases that are used by network testers or test systems to check specific network operation or for example to test a new network feature. During network operation or execution, for example test case RABs and RAB combinations may be set up and terminated on demand. For each use case or use case group, the used UeRcs and UeRc transitions may be identified and a state model may be associated therewith.

In the following, reference is made primarily to the PM functionality 1021 and the RAB analyzer 1022, wherein the mobile network 100 (or more appropriately, the RAB 1002) may be considered as the object to be monitored.

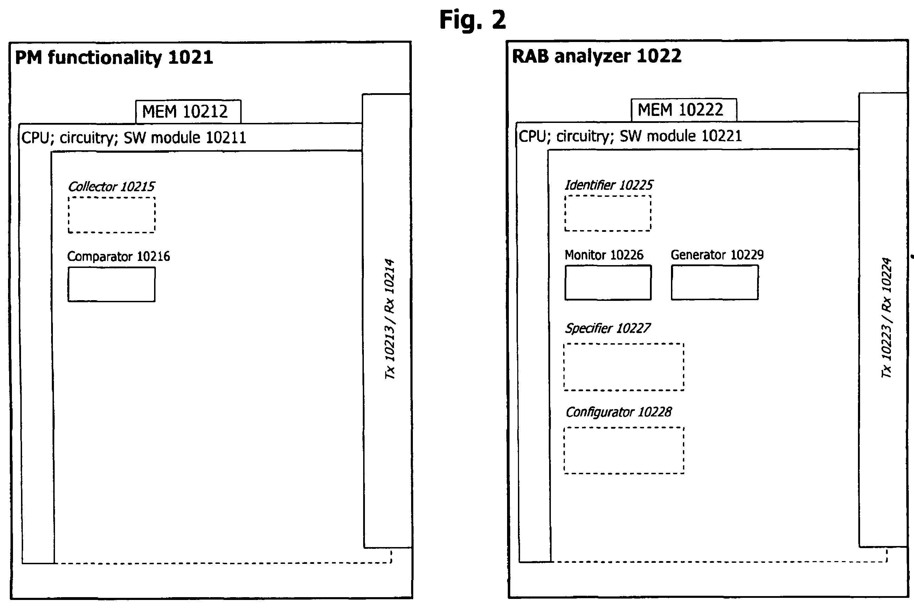

Fig. 2 shows a general embodiment of the PM functionality 1021 and the RA analyzer 1022. As shown in Fig. 2, the PM functionality 1021 comprises a core functionality (e.g., one or more of a central processing unit (CPU), dedicated circuitry and/or a software module) 10211, a memory (and/or database) 10212, a transmitter 10213 and a receiver 10214. Moreover, the PM functionality 1021 comprises an optional collector 10215 and a comparator 10216.

In turn, as shown in Fig. 2, the RAB analyzer 1022 comprises a core functionality 10221, a memory (and/or database) 10222, a transmitter 10223 and a receiver 10224. Moreover, the RAB analyzer 1022 comprises an optional identifier 10225, a monitor 10226, an optional specifier 10227, an optional configurator 10228 and a generator 10229.

As indicated by the dashed extensions of the functional blocks of the CPU 101x1 (wherein x = 1 and/or 2), the collector 10215 and the comparator 10216 (of the PM functionality 1021), the identifier 10225, the monitor 10226, the specifier 10227, the configurator 10228 and the generator 10229 (of the RAB analyzer 1022) as well as the memory 102x2, the transmitter 101x3 and the receiver 101x4 may at least partially be functionalities running on the CPU 101x1, or may alternatively be separate functional entities or means controlled by the CPU 101x1 and supplying the same with information. For both the PM functionality 1021 and the RAB analyzer 1022, the transmitter and receiver components 101x3, 101x4 may be realized to comprise suitable interfaces and/or suitable signal generation and evaluation functions.

The CPU 101x1 may be configured, for example, using software residing in the memories 101x2, to process various data inputs and to control the functions of the memory 101x2, the transmitter 101x3 and the receiver 101x4 (as well the collector 10215 and the comparator 10216 (of the PM functionality 1021), the identifier 10225, the monitor 10226, the specifier 10227, the configurator 10228 and the generator 10229 (of the RAB analyzer 1022)). The memory 101x2 may serve for storing program code for carrying out the methods according to the aspects disclosed herein, when executed by the CPU 101x1.

It is to be noted that the transmitter 101x3 and the receiver 101x4 may be provided as an integral transceiver, as is indicated in Fig. 2. It is further to be noted that the transmitters/receivers 101x3, 101x4 may be implemented as physical transmitters/receivers for transceiving via an air interface or a wired connection (e.g., between the PM functionality 1021 and the RAB analyzer 1022 when they are embodied separate entities), as routing/forwarding entities/interfaces between network elements (e.g., between the PM functionality 1021 and the RAB analyzer 1022 when they are embodied as functionally adjacent entities), as functionalities for writing/reading information into/from a given memory area (e.g., between the PM functionality 1021 and the RAB analyzer 1022 when they are embodied as two (or more) logical units disposed on one physical unit) or as any suitable combination of the above. At least one of the above-described collector 10215 and comparator 10216 (of the PM functionality 1021), identifier 10225, monitor 10226, specifier 10227, the configurator 10228 and the generator 10229 (of the RAB analyzer 1022), or the respective functionalities, may also be implemented as a chipset, module or subassembly.

Moreover, in the apparatus aspect, the PM functionality 1021 may be part of or linked to the NMS 102 or an Operating Support System, OSS. Alternatively, the PM functionality 1021 comprises the presentation function 1023.

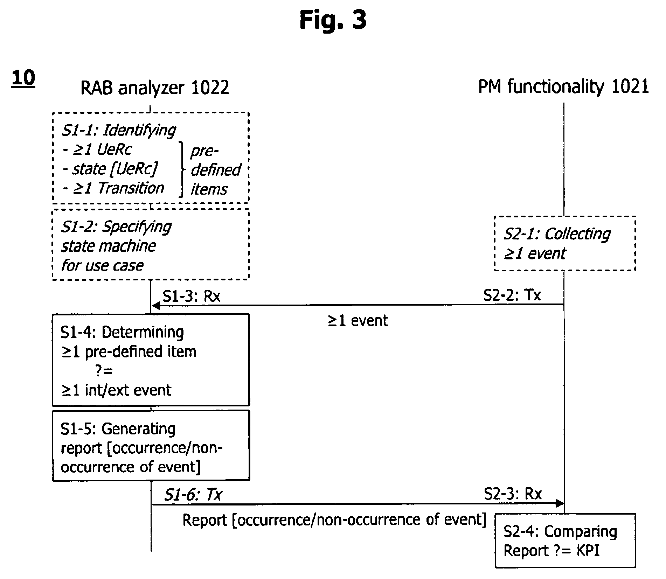

Fig. 3 illustrates an embodiment of a method for RAB monitoring. In the signalling diagram of Fig. 3, signalling between elements is indicated in the horizontal direction, while time aspects between signalling are reflected in the vertical arrangement of the signalling sequence as well as in the sequence numbers. It is to be noted that the time aspects indicated in Fig. 3 do not necessarily restrict any one of the method steps shown to the step sequence outlined in Fig. 3. This applies in particular to method steps that are functionally disjunctive with each other. For instance, all steps S1-1 to S2-4 are shown to be timely substantially flowing; however, especially steps S1-2 (specifying) and S2-1 (collecting) may or may not be carried out directly subsequently.

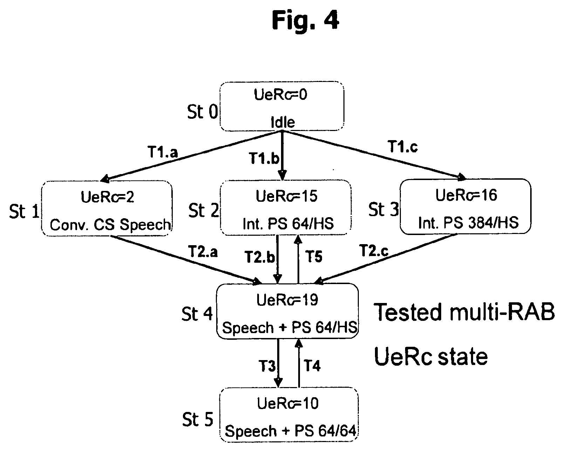

Referring still to the signalling diagram of Fig. 3 (to be read along with the PM functionality 1021 and the RAB analyzer 1022 illustrated in Fig. 2), there is at least one RAB 1002, which may be a logical channel of the RAN 1004 and may connect the UE 1001 and the Core Network 1003, wherein the following items are pre-identified (e.g., pre-defined or otherwise provided): i) at least one UeRc, ii) a state (St1 to St5, see below with reference to Fig. 4) of the UeRc, and iii) at least one transition (T1.a, T1.b, T1.c, T2.a, T2.b, T2c, T3, T4, T5, see below with reference to Fig. 4) to or from the state.

In optional offline step S1-1, the identifier 10225 of the RAB analyzer 1022 performs identifying the pre-defined items, and in optional offline step S1-2, the specifier 10227 of the RAB analyzer 1022 performs specifying a state machine for a use case, wherein the use case comprises a plurality of the states and of the transitions both attributable to a typical user behaviour. In other words, the operation of the RA 1022 may be based on use cases or use case groups. Several use cases (or use case groups) may be defined and monitored in the network 10 at the same time. As a first step, for each use case (or use case group), the involved UeRc and transitions between the UeRc states are identified. Based on the identification, the state machine is specified in the RA 1022 for each use case (or use case groups).

Still further, the configurator 10228 of the RAB analyzer 1022 may perform configuring a new use case by introducing a new UeRc associated with the new use case, performing, in a test environment, a number of test use cases, and comparing results of the test use cases to a desired output.

Equally optional, the collector 10215 of the PM functionality 1021 performs collecting the at least one internal or external event from the radio access network. In this instance, the KPI (against which the later report may be compared to) may at least one of a downlink throughput, an uplink throughput, a signal level, an interference level and a speech quality indicator.

Then, in step S2-2, the transmitter 10213 of the PM functionality 10231 performs transmitting at least one event provided by a network node of the radio access network. Consequently, in step S1-3, the receiver 10224 of the RAB analyzer 1022 performs receiving the at least one event provided by a network node of the radio access network.

In a special case, the step of transmitting (S2-2) or receiving (S1-3) the at least one event may further comprise one of transmitting or receiving the at least one event in real-time, and transmitting or receiving, every time interval, a file comprising aggregated events. In other words, the (PM) events may be sent to the RA 1022 in real-time or periodically in a file. In the RA 1022, only the relevant events may be processed (i.e., relevant to the activated use cases). The rest of the events may be dropped. The events first may be sorted per UeRc transitions. This may be done primarily by filtering the events for source and target UeRc-s.

Then, in step S1-4, the monitor 10226 of the RAB analyzer 1022 performs determining whether the event coincides with at least one of the pre-identified items.

If so, the determining may be performed only for relevant internal or external performance management events. In the latter case, the relevant performance management events may be comprised in a use case or irrelevant events are not comprised in the use case. Still further, the relevant or irrelevant events are determined based on filtering the events according to at least one of a source UeRc and a target UeRc. In other words, the RA 1022 may be configured to monitor the transitions between the UeRc states for each use case. The RA 1022 may activate the events corresponding to the activated use cases in the network nodes. In order to achieve monitoring per UeRcs and per UeRc transitions, specific event correlation and parameter filtering may be applied.

Accordingly, in step S1-5, the generator 10229 of the RAB analyzer 1022 performs generating, based on the result of the determination, a report indicating occurrence or non-occurrence of the event.

Further, in an optional step S1-6, the transmitter 10223 of the RAB analyzer 1022 performs transmitting the generated report. Accordingly, in step S2-3, the receiver 10214 of the PM functionality 1021 performs receiving (responsive to the transmitting in step S2-2 by means of the steps determining S1-4 and generating S1-5) the report indicating occurrence or non-occurrence of the event.

Moreover, the report may be generated (S1-5) or received (S2-3) per one of a cell, the UeRc, the transition, and the use case. Still further, the step of generating (S1-5) or receiving (S2-3) the report may further comprises one of generating or receiving the report in real-time, and generating or receiving the report every time interval, wherein the report indicates aggregated occurrence or non-occurrence of the event.

Finally, in step S2-4, the comparator 10216 of the PM functionality 1021 performs comparing the report to the at least one KPI.

In any of the above-described steps, the event may be one or more of an RAB setup, an RAB loss, an RAB setup failure, an RAB termination, a soft handover and a hard handover. Moreover, the event may be one or both of an RAB loss and an RAB setup failure. The report may comprise a cause code identifying the cause of RAB loss or RAB setup failure. In the latter case, the method may be performed per cell, and the method may further comprise ranking the cells according to the respective cells having thrown the cause code or not, and performing the method again, only with respect to those cells having thrown the cause code, per UeRc, per transition and per the use case.

Moreover, the RA 1022 may report the number of (non-)occurrence, for example for RAB setup, RAB loss, RAB termination, soft and hard handover. The (non-) occurrences may be reported per cell, per UeRc-s, per UeRc transitions as well as per use cases. As said, the (non-)occurrences may be reported either real-time (monitoring) or periodically, aggregated for a result output period (counting). In the end, the monitors and counters from the RA 1022 may be compared with other real-time measurements and KPIs, such as throughput, signal levels, interference levels, speech quality indicators, etc.

A special case deserves attention: in case of overlap between the use cases, for example involving events that are associated to the same UeRc transition but to different use cases, event correlation or additional filtering may be applied in order to separate the use cases. These parameters can for example be specific cause codes referring to establishment or termination cases. If the overlap cannot be eliminated by filtering or event correlation, the RA 1022 may disable temporarily the overlapping UeRcs for the time of the corresponding measurement.

Finally, the RA 1022 may be used in different ways. One possibility is for example the following: In a test lab or test environment, the use cases may directly be covered by test cases. In this case, the results can directly be compared with the desired output. This can be used to verify e.g. introducing or validating a new UeRc into the network. Another important usage is to monitor and identify the configured use cases in the real network. The results may be compared with the one measured in test network.

Fig. 4 shows a first exemplary embodiment of a UeRc state machine (see step S1-2 in Fig. 3) comprising a multi-RAB state to be tested. Fig. 4 shows six states of the UeRc (labelled St0 to St5), wherein state St4 is the multi-RAB state to be tested. Further, Fig. 4 shows transitions (labelled T1.a, T1.b, T1.c, T2.a, T2.b, T2c, T3, T4, and T5) between the states St0 to St5, wherein "transition" is to be read as a condition under which one state transits into another.

In order to test and verify the multi-RAB state St4, a use case group is defined. An example of such a use case group is shown in Fig. 4. Initially, the UE is in idle mode (denoted as UeRc=0, St0). Then, the user may initiate a speech call (transition condition T1.a) for which a state UeRc=2, St1 is established. Alternatively, a user may start (T1.b) to download a file (denoted as UeRc=15, St2). As another alternative, when the user starts (T1.c) to upload a file, another state St3 is assumed (UeRc=16 PS 384/HS RAB).

Now, if the user starts (T2.a) to use the Internet service during a phone conversation, or answers (T2.b, T2.c) a phone call during file download or upload, the state St4 (denoted as UeRc=19, multi-RAB UeRc state) is established. However, if the radio conditions are not good enough (T3), the state St4 (UeRc=19) is switched/transited to state St5 (UeRc=10). After a successful handover to a cell with good radio conditions (T4), the state St4 (UeRc=19) is established again. When the user terminates the speech call during file download (T5), the session continues using state St2 (UeRc=15).

From the events (meaning transitions tacking actually place), monitors or counters may be created. Monitors may be applied for real-time events, and these are measured values or counters aggregated for short time periods, for example less than 1 minute. Alternatively, counters represent aggregated results e.g. number of events, or occurrence for e.g. 5 or 15 minutes. Monitors may be processed and reported in real-time, whereas counters may be stored.

During RAB setup, the following events may be identified by the RA 1022: Radio Resource Control (RRC) connection setup request, RRC connection setup response, RAB assignment request, and/or RAB assignment response.

RAB setup attempt and success counters or monitors may be created for filtering according to states St0 to St5 (UeRc=0, 2, 10, 15, 16, 19) as source and target configuration. In addition, counters/monitors are set up for the following UeRc transitions: T1.a (0->2), T1.b (0→15), T1.c (0->16), T2.a (2->19), T2.b (15->19), T2.c (16->19), T3 (19->10), T4 (10->19) and T5 (19->15) applying filters for both for source and target configurations. If source and target configuration parameters are not available, a filter can be created for establishing cause or other parameters making it possible to separate the different initial and final states.

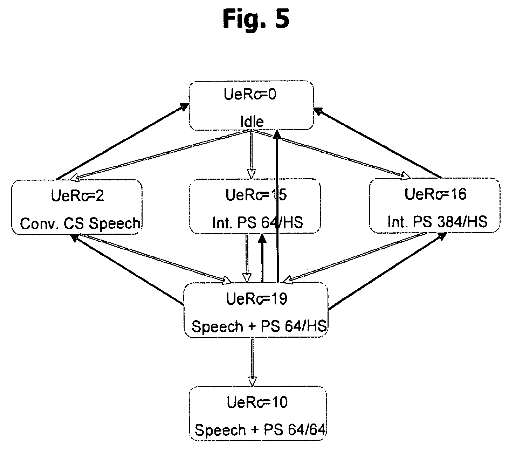

Fig. 5 shows possible failure cases and related transitions in the first exemplary embodiment of Fig. 4. In Fig. 5, attempted transitions in case of call setup failure are denoted by non-filled arrows, and transitions due to normal and abnormal RAB Release or handover failure are denoted by solid (filled) arrows.

(Event) monitors similar to those described above may be created for RAB setup failure, indicated by the non-filled arrows in Fig 5. Accordingly, for the RAB setup failure, one or more of the following events may be monitored and filtered for source and target configuration:
Call setup failure and/or RAB assignment failure.

Furthermore, monitoring RAB losses during ongoing session might be considered as monitoring decisive events. Examples for the related transitions are denoted by the solid arrows in Fig. 5. RAB losses may be monitored by the subsequent detection of one or more of the following events:
RRC connection request and/or System release.

Those events may be filtered for UeRcs, and UeRc transitions, using source and target configuration parameters.

In each of the above-described cases (RAB setup, RAB setup failure and RAB loss), filtering may be performed also for other event parameters in addition to the source and target configuration, for example signal-to-noise (Ec/No) or Received Signal Code Power (RSCP) radio environment parameters. This enables identifying channel switching due to a non-beneficial radio environment.

In addition, filtering for cause codes and sub-cause codes may enable more detailed troubleshooting and cause identification. Note that filtering for cause codes may be considered more important for RAB setup failure and RAB loss cases.

Optionally, the monitored events may be stored in a database. This enables tracing back sessions later-on for troubleshooting or detailed investigation, examining the reported radio condition as well as cause code values of the affected events.

Based on the above-described monitors or counters, the RA 1022 may be able to provide one or more of the following reports:
Number of RAB setup attempts, Number of successful RAB setups, Number of RAB setup failures and/or Number of RAB losses.

As said, the above reports may be reported per UeRcs and/or per UeRc transitions. Also, the reporting may additionally or alternatively occur per use cases and/or per cells.

However, it might not always be necessary to employ the system at this detailed level and to present data in such detail. During monitoring, an assurance system may only employ high-level failure monitors continuously without any subsequent filtering for example for UeRcs or cause codes etc. In this case, the high-level monitors may be presented per cells, and the cells in turn may be ranked according to the failure events. However, when a failure is detected, more detailed troubleshooting monitors/ counters on UeRcs and UeRc transitions, as described above, may be activated on the affected cells. Moreover, troubleshooting monitors or counters may be presented as a function of a radio environment (in WCDMA, e.g. RSCP and Ec/No) and may be distributed among the cause codes in a next step.

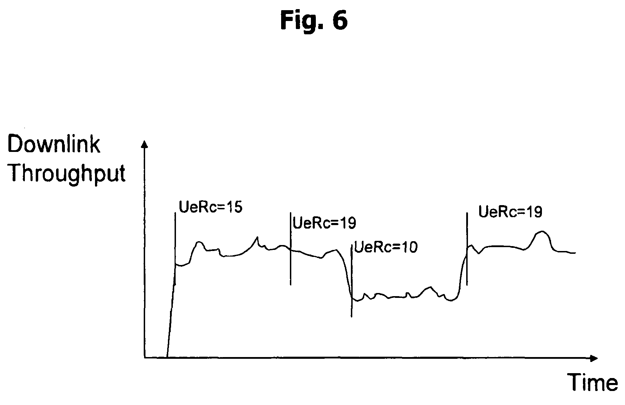

Finally, Fig. 6 shows an effect of the first exemplary embodiment on a KPI (here: DL throughput) over time. The above monitors or counters can be combined and presented with other KPI measurements as well, e.g. throughput or speech quality, system utilization and the like. The monitored UeRc transitions may be presented as a function over time of a KPI (e.g. DL throughput in Fig. 6).

Resuming the use case group example of Fig. 4, the development in Fig. 6 shows the following: from a state St0 (UeRc = 0), the user starts (T1.b) to download a file, whereupon state St2 (UeRc = 15) is assumed having considerable DL throughput. Then, the user may want to answer (T2.b) a phone call during file download, whereupon state St4 (UeRc = 19) is assumed having substantially the same DL throughput as before. At a certain time, radio conditions in the cell may deteriorate (T3), whereupon the UE is forced to transit to state St5 (UeRc = 10) in order to maintain both the phone call and file download with a lesser DL throughput. Some time later, the radio conditions in the cell may become better again or a handover to a cell with "better" radio condition might occur (T4), so that the UE may re-assume the more DL-throughput beneficial state St 4 (UeRc = 19).

## Claims

1. A method of generating reports for at least one Radio Access Bearer, RAB (1002) of a radio access network (1004), wherein the following items are pre-identified: i) at least one User Equipment Radio Connection, UeRc, ii) a state (St1 to St5) of the UeRc, and iii) at least one transition (T1.a, T1.b, T1.c, T2.a, T2.b, T2c, T3, T4, T5) to or from the state, the method being performed in an RAB analyzer (1022) and comprising the steps of:
receiving (S1-3) at least one event provided by a network node of the radio access network;
determining (S1-4) whether the event coincides with at least one of the pre-identified items; and
generating (S1-5), based on the result of the determination, a report indicating occurrence or non-occurrence of the event, wherein the report is generated per:
a use case, wherein the use case comprises a plurality of the states and of the transitions both attributable to a typical user behaviour.

2. The method according to claim 1, further comprising:
transmitting (S1-6) the generated report.

3. The method according to claim 1 or 2, wherein the determining is performed only for relevant internal or external performance management events.

4. The method according to any one of claims 1 to 3, further comprising the following offline steps:
identifying (S1-1) the items; and
specifying (S1-2) a state machine for the use case, wherein the use case comprises a plurality of the states and of the transitions both attributable to a typical user behaviour.

5. A method of comparing a report to at least one Key Performance Indicator, KPI, on at least one Radio Access Bearer, RAB (1002) of a radio access network (1004), the method being performed in a Performance Management, PM, functionality (1021) and comprising the steps of:
transmitting (S2-2) at least one event provided by a network node of the radio access network to a RAB analyzer;
receiving (S2-3), responsive to the transmitting, a report indicating occurrence or non-occurrence of the event from the RAB analyzer and
comparing (S2-4) the report to the at least one KPI, wherein the report is received per:
a use case, wherein the use case comprises a plurality of the states and of the transitions both attributable to a typical user behaviour.

6. The method according to claim 5, further comprising:
collecting (S2-1) the at least one internal or external event from the radio access network; and/or
wherein the KPI is at least one of a downlink throughput, an uplink throughput, a signal level, an interference level and a speech quality indicator.

7. The method according to any one of claims 1 to 6 wherein the event is one of an RAB setup, an RAB loss, an RAB setup failure, an RAB termination, a soft handover and a hard handover.

8. The method according to any one of claims 1 to 7, wherein the step of generating or receiving the report further comprises one of:
generating or receiving the report in real-time; and
generating or receiving the report every time interval, wherein the report indicates aggregated occurrence or non-occurrence of the event; and/or
wherein the step of transmitting or receiving the at least one event further comprises one of:
transmitting or receiving the at least one event in real-time; and
transmitting or receiving, every time interval, a file comprising aggregated events.

9. The method according to any of claims 1 to 8, wherein the event is one of an RAB loss and an RAB setup failure, and wherein the report further comprises a cause code identifying the cause of RAB loss or RAB setup failure; and
wherein, optionally, the method is performed per cell, and the method further comprising:
ranking the cells according to the respective cells having thrown the cause code or not; and
performing the method again, only with respect to those cells having thrown the cause code, per UeRc, per transition and per the use case.

10. A computer program product comprising program code portions for performing the method of any one of the preceding claims when the computer program product is executed on one or more computing devices.

11. A network entity (1022) for generating reports for at least one Radio Access Bearer, RAB (1002) of a radio access network (1004), wherein the following items are pre-identified: i) at least one User Equipment Radio Connection, UeRc, ii) a state (St1 to St5) of the UeRc, and iii) at least one transition (T1.a, T1.b, T1.c, T2.a, T2.b, T2c, T3, T4, T5) to or from the state, the network entity being an RAB analyzer (1022) and comprising at least one processor (10221), configured to:
- receive at least one event provided by a network node of the radio access network;
- determine whether the event coincides with at least one of the pre-identified items; and
- generate, based on the result of the determination, a report indicating occurrence or non-occurrence of the event, wherein the processor is further configured to generate the report per:
a use case, wherein the use case comprises a plurality of the states and of the transitions both attributable to a typical user behaviour.

12. The network entity according to claim 11, wherein the network entity is comprised in one of a Performance Management, PM, functionality (1021), a Network Management System, NMS (102), and an Operating Support System, OSS.

13. A network entity (1021) of comparing a report to at least one Key Performance Indicator, KPI, on at least one Radio Access Bearer, RAB (1002) of a radio access network (1004), the network entity being a Performance Management, PM, functionality (1021) and comprising at least one processor (10211), configured to:
- transmit at least one event provided by a network node of the radio access network to a RAB analyzer,
- receive, responsive to the transmitting operation, the report indicating occurrence or non-occurrence of the event from the RAB analyzer; and
- compare the report to the at least one KPI, wherein the processor is further configured to receive the report per:
a use case, wherein the use case comprises a plurality of the states and of the transitions both attributable to a typical user behaviour.

14. The network entity according to claim 13, wherein the network entity is comprised in one of a Network Management System, NMS (102), and an Operating Support System, OSS; and/or
wherein the network entity is a presentation function (1023) comprised in the PM functionality.

15. A system (10), comprising:
a Radio Access Bearer, RAB, analyzer (1022) according to claim 11;
a Performance Management, PM, functionality (1021) according to claim 13; and
a Domain Management Server, DMS (101),
wherein the RAB analyzer is configured to fetch network topology information comprising the at least one state of the UeRc and the at least one transition to or from the state from the DMS, and wherein internal or external events are sent to the RAB analyzer directly or via the DMS.

## Patentansprüche

1. Verfahren zum Erzeugen von Berichten für mindestens einen Funkzugangsträger, RAB (1002), eines Funkzugangsnetzes (1004), wobei die folgenden Elemente vordefiniert sind: i) mindestens eine Benutzereinrichtungs-Funkverbindung, UeRc, ii) ein Zustand (St1 bis St5) der UeRc und iii) mindestens ein Übergang (T1.a, T1.b, T1.c, T2.a, T2.b, T2.c, T3, T4, T5) in den und aus dem Zustand, wobei das Verfahren in einem RAB-Analysator (1022) durchgeführt wird und die folgenden Schritte umfasst:
Empfangen (S1-3) mindestens eines Ereignisses, das von einem Netzknoten des Funkzugangsnetzes bereitgestellt wird;
Bestimmen (S1-4), ob das Ereignis mit mindestens einem der vordefinierten Elemente übereinstimmt; und
Erzeugen (S1-5) basierend auf dem Ergebnis der Bestimmung eines Berichts, der den Eintritt oder Nichteintritt des Ereignisses anzeigt, wobei der Bericht erzeugt wird pro:
Anwendungsfall, wobei der Anwendungsfall eine Mehrzahl der Zustände und der Übergänge umfasst, die beide einem typischen Benutzerverhalten zuschreibbar sind.

2. Verfahren nach Anspruch 1, ferner umfassend:
Senden (S1-6) des erzeugten Berichts.

3. Verfahren nach Anspruch 1 oder 2, wobei das Bestimmen nur für relevante interne oder externe Leistungsverwaltungsereignisse durchgeführt wird.

4. Verfahren nach einem der Ansprüche 1 bis 3, ferner umfassend die folgenden Offline-Schritte:
Identifizieren (S1-1) der Elemente; und
Spezifizieren (S1-2) einer Zustandsmaschine für den Anwendungsfall, wobei der Anwendungsfall eine Mehrzahl der Zustände und der Übergänge umfasst, die beide einem typischen Benutzerverhalten zuschreibbar sind.

5. Verfahren zum Vergleichen eines Berichts mit mindestens einer Leistungskennzahl, KPI, auf mindestens einem Funkzugangsträger, RAB (1002), eines Funkzugangsnetzes (1004), wobei das Verfahren in einer Leistungsverwaltungs, PM,-Funktionalität (1021) durchgeführt wird und die folgenden Schritte umfasst:
Senden (S2-2) mindestens eines Ereignisses, das von einem Netzknoten des Funkzugangsnetzes bereitgestellt wird, an einen RAB-Analysator;
Empfangen (S2-3) in Reaktion auf das Senden eines Berichts, der den Eintritt oder Nichteintritt des Ereignisses anzeigt, vom RAB-Analysator; und
Vergleichen (S2-4) des Berichts mit der mindestens einen KPI, wobei der Bericht empfangen wird pro:
Anwendungsfall, wobei der Anwendungsfall eine Mehrzahl der Zustände und der Übergänge umfasst, die beide einem typischen Benutzerverhalten zuschreibbar sind.

6. Verfahren nach Anspruch 5, ferner umfassend:
Sammeln (S2-1) des mindestens einen internen oder externen Ereignisses vom Funkzugangsnetz; und/oder
wobei die KPI mindestens eines von einem Downlink-Durchsatz, einem Uplink-Durchsatz, einem Signalpegel, einem Störpegel und einem Sprachqualitätsindikator ist.

7. Verfahren nach einem der Ansprüche 1 bis 6, wobei das Ereignis eines von einem RAB-Aufbau, einem RAB-Verlust, einem RAB-Aufbaufehler, einer RAB-Beendigung, einem sanften Handover und einem harten Handover ist.

8. Verfahren nach einem der Ansprüche 1 bis 7, wobei der Schritt des Erzeugen oder Empfangens des Berichts ferner eines umfasst von:
Erzeugen oder Empfangen des Berichts in Echtzeit; und
Erzeugen oder Empfangen des Berichts jedes Zeitintervall, wobei der Bericht angehäufte Eintritte oder Nichteintritte des Ereignisses anzeigt; und/oder
wobei der Schritt des Sendens oder Empfangens des mindestens einen Ereignisses ferner eines umfasst von:
Senden oder Empfangen des mindestens einen Ereignisses in Echtzeit; und
Senden oder Empfangen jedes Zeitintervall einer Datei, die angehäufte Ereignisse umfasst.

9. Verfahren nach einem der Ansprüche 1 bis 8, wobei das Ereignis eines von einem RAB-Verlust und einem RAB-Aufbaufehler ist, und wobei der Bericht ferner einen Ursachencode umfasst, der die Ursache des RAB-Verlusts oder RAB-Aufbaufehlers identifiziert; und
wobei das Verfahren optional pro Zelle durchgeführt wird, und das Verfahren umfasst:
Reihen der Zellen gemäß den jeweiligen Zellen, die den Ursachencode verworfen haben oder nicht; und
erneutes Durchführen des Verfahrens nur in Bezug auf jene Zellen, die den Ursachencode verworfen haben, pro UeRc, pro Übergang und pro Anwendungsfall.

10. Computerprogrammprodukt, umfassend Programmcodeabschnitte zum Durchführen des Verfahrens nach einem der vorhergehenden Ansprüche, wenn das Computerprogrammprodukt auf einer oder mehreren Computervorrichtungen ausgeführt wird.

11. Netzinstanz (1022) zum Erzeugen von Berichten für mindestens einen Funkzugangsträger, RAB (1002), eines Funkzugangsnetzes (1004), wobei die folgenden Elemente vordefiniert sind: i) mindestens eine Benutzereinrichtungs-Funkverbindung, UeRc, ii) ein Zustand (St1 bis St5) der UeRc und iii) mindestens ein Übergang (T1.a, T1.b, T1.c, T2.a, T2.b, T2.c, T3, T4, T5) in den und aus dem Zustand, wobei die Netzinstanz ein RAB-Analysator (1022) und mindestens einen Prozessor (10221) umfasst, der konfiguriert ist zum:
- Empfangen mindestens eines Ereignisses, das von einem Netzknoten des Funkzugangsnetzes bereitgestellt wird;
- Bestimmen, ob das Ereignis mit mindestens einem der vordefinierten Elemente übereinstimmt; und
- Erzeugen basierend auf dem Ergebnis der Bestimmung eines Berichts, der den Eintritt oder Nichteintritt des Ereignisses anzeigt, wobei der Prozessor ferner so konfiguriert ist, dass er den Bericht erzeugt pro:
Anwendungsfall, wobei der Anwendungsfall eine Mehrzahl der Zustände und der Übergänge umfasst, die beide einem typischen Benutzerverhalten zuschreibbar sind.

12. Netzinstanz nach Anspruch 11, wobei die Netzinstanz in einem von einer Leistungsverwaltungs, PM, Funktionalität (1021), einem Netzverwaltungssystem, NMS (102), und einem Betriebsunterstützungssystem, OSS, enthalten ist.

13. Netzinstanz (1021) zum Vergleichen eines Berichts mit mindestens einer Leistungskennzahl, KPI, auf mindestens einem Funkzugangsträger, RAB (1002), eines Funkzugangsnetzes (1004), wobei die Netzinstanz eine Leistungsverwaltungs, PM,-Funktionalität (1021) ist und mindestens einen Prozessor (10211) umfasst, der konfiguriert ist zum:
- Senden mindestens eines Ereignisses, das von einem Netzknoten des Funkzugangsnetzes bereitgestellt wird, an einen RAB-Analysator;
- Empfangen in Reaktion auf das Senden eines Berichts, der den Eintritt oder Nichteintritt des Ereignisses anzeigt, vom RAB-Analysator; und
- Vergleichen des Berichts mit der mindestens einen KPI, wobei der Prozessor ferner so konfiguriert, dass er den Bericht empfängt pro:
Anwendungsfall, wobei der Anwendungsfall eine Mehrzahl der Zustände und der Übergänge umfasst, die beide einem typischen Benutzerverhalten zuschreibbar sind.

14. Netzinstanz nach Anspruch 13, wobei die Netzinstanz in einem von einem Netzverwaltungssystem, NMS (102), und einem Betriebsunterstützungssystem, OSS, enthalten ist; und/oder
wobei die Netzinstanz eine Darstellungsfunktion (1023) ist, die in der PM-Funktionalität enthalten ist.

15. System (10), umfassend:
einen Funkzugangsträger, RAB,-Analysator (1022) nach Anspruch 11;
eine Leistungsverwaltungs, PM,-Funktionalität (1021) nach Anspruch 13;
einen Domänenverwaltungsserver, DMS (101),
wobei der RAB-Analysator so konfiguriert ist, dass er Netztopologie-Informationen, die den mindestens einen Zustand der UeRc und den mindestens einen Übergang in den und aus dem Zustand umfassen, vom DMS abruft, und wobei interne oder externe Ereignisse direkt oder über den DMS an den RAB-Analysator gesendet werden.

## Revendications

1. Procédé de génération de rapports pour au moins un support d'accès radio, RAB, (1002) d'un réseau d'accès radio (1004), dans lequel les éléments suivants sont préalablement identifiés : i) au moins une connexion radio d'équipement d'utilisateur, UeRc, ii) un état (St1 à St5) de l'UeRc, et iii) au moins une transition (T1.a, T1.b, T1.c, T2.a, T2.b, T2.c, T3, T4, T5) vers l'état ou à partir de l'état, le procédé étant effectué dans un analyseur de RAB (1022) et comprenant les étapes de :
la réception (S1-3) d'au moins un événement fourni par un noeud de réseau du réseau d'accès radio ;
la détermination (S1-4) si l'événement coïncide avec au moins l'un des éléments préalablement identifiés ; et
la génération (S1-5), sur la base du résultat de la détermination, d'un rapport indiquant l'occurrence ou la non-occurrence de l'événement, dans lequel le rapport est généré d'après :
un cas d'utilisation, dans lequel le cas d'utilisation comprend une pluralité des états et des transitions qui sont attribuables à un comportement d'utilisateur type.

2. Procédé selon la revendication 1, comprenant en outre :
la transmission (S1-6) du rapport généré.

3. Procédé selon la revendication 1 ou 2, dans lequel la détermination est effectuée uniquement pour des événements de gestion de performances internes ou externes pertinents.

4. Procédé selon l'une quelconque des revendications 1 à 3, comprenant en outre les étapes hors ligne suivantes :
l'identification (S1-1) des éléments ; et
la spécification (S1-2) d'une machine d'état pour le cas d'utilisation, dans lequel le cas d'utilisation comprend une pluralité des états et des transitions qui sont attribuables à un comportement d'utilisateur type.

5. Procédé de comparaison d'un rapport à au moins un indicateur de performance clé, KPI, sur au moins un support d'accès radio, RAB, (1002) d'un réseau d'accès radio (1004), le procédé étant effectué dans une fonctionnalité de gestion de performance, PM, (1021) et comprenant les étapes de :
la transmission (S2-2) d'au moins un événement fourni par un noeud de réseau du réseau d'accès radio à un analyseur de RAB ;
la réception (S2-3), en réponse à la transmission, d'un rapport indiquant l'occurrence ou la non-occurrence de l'événement à partir de l'analyseur de RAB ; et
la comparaison (S2-4) du rapport à l'au moins un KPI, dans lequel le rapport est reçu d'après :
un cas d'utilisation, dans lequel le cas d'utilisation comprend une pluralité des états et des transitions qui sont attribuables à un comportement d'utilisateur type.

6. Procédé selon la revendication 5, comprenant en outre :
la collecte (S2-1) de l'au moins un événement interne ou externe à partir du réseau d'accès radio ; et/ou
dans lequel le KPI est au moins l'un d'un débit de liaison descendante, d'un débit de liaison montante, d'un niveau de signal, d'un niveau d'interférences et d'un indicateur de qualité vocale.

7. Procédé selon l'une quelconque des revendications 1 à 6, dans lequel l'événement est l'un d'une configuration de RAB, d'une perte de RAB, d'un échec de configuration de RAB, d'une terminaison de RAB, d'un transfert intercellulaire souple et d'un transfert intercellulaire rigide.

8. Procédé selon l'une quelconque des revendications 1 à 7, dans lequel l'étape de la génération ou de la réception du rapport comprend en outre l'une de :
la génération ou la réception du rapport en temps réel ; et
la génération ou la réception du rapport à un intervalle de temps, dans lequel le rapport indique l'occurrence ou la non-occurrence agrégée de l'événement ; et/ou
dans lequel l'étape de la transmission ou de la réception de l'au moins un événement comprend en outre l'une de :
la transmission ou la réception de l'au moins un événement en temps réel ; et
la transmission ou la réception, à un intervalle de temps, d'un fichier comprenant des événements agrégés.

9. Procédé selon l'une quelconque des revendications 1 à 8, dans lequel l'événement est l'un d'une perte de RAB et d'un échec de configuration de RAB, et dans lequel le rapport comprend en outre un code de cause identifiant la cause d'une perte de RAB ou d'un échec de configuration de RAB ; et
dans lequel, facultativement, le procédé est effectué par cellule, et le procédé comprenant en outre :
le classement des cellules selon les cellules respectives ayant ou non déclenché le code de cause ; et
l'exécution du procédé à nouveau uniquement en ce qui concerne les cellules ayant déclenché le code de cause, par UeRc, par transition et par cas d'utilisation.

10. Produit de programme informatique comprenant des portions de code de programme pour effectuer le procédé selon l'une quelconque des revendications précédentes lorsque le produit de programme informatique est exécuté sur un ou plusieurs dispositifs informatiques.

11. Entité de réseau (1022) destinée à générer des rapports pour au moins un support d'accès radio, RAB, (1002) d'un réseau d'accès radio (1004), dans laquelle les éléments suivants sont préalablement identifiés : i) au moins une connexion radio d'équipement d'utilisateur, UeRc, ii) un état (St1 à St5) de l'UeRc, et iii) au moins une transition (T1.a, T1.b, T1.c, T2.a, T2.b, T2.c, T3, T4, T5) vers l'état ou à partir de l'état, l'entité de réseau étant un analyseur de RAB (1022) et comprenant au moins un processeur (10221) configuré pour effectuer :
- la réception d'au moins un événement fourni par un noeud de réseau du réseau d'accès radio ;
- la détermination si l'événement coïncide avec au moins l'un des éléments préalablement identifiés ; et
- la génération, sur la base du résultat de la détermination, d'un rapport indiquant l'occurrence ou la non-occurrence de l'événement, dans laquelle le processeur est en outre configuré pour générer le rapport d'après :
un cas d'utilisation, dans laquelle le cas d'utilisation comprend une pluralité des états et des transitions qui sont attribuables à un comportement d'utilisateur type.

12. Entité de réseau selon la revendication 11, dans laquelle l'entité de réseau est comprise dans l'un d'une fonctionnalité de gestion de performance, PM, (1021), d'un système de gestion de réseau, NMS, (102) et d'un système de support d'exploitation, OSS.

13. Entité de réseau (1021) destinée à comparer un rapport à au moins un indicateur de performance clé, KPI, sur au moins un support d'accès radio, RAB, (1002) d'un réseau d'accès radio (1004), l'entité de réseau étant une fonctionnalité de gestion de performance, PM, (1021) et comprenant au moins un processeur (10211) configuré pour effectuer :
- la transmission d'au moins un événement fourni par un noeud de réseau du réseau d'accès radio à un analyseur de RAB ;
- la réception, en réponse à l'opération de transmission, du rapport indiquant l'occurrence ou la non-occurrence de l'événement à partir de l'analyseur de RAB ; et
- la comparaison du rapport à l'au moins un KPI, dans lequel le processeur est en outre configuré pour effectuer la réception du rapport d'après :
un cas d'utilisation, dans laquelle le cas d'utilisation comprend une pluralité des états et des transitions qui sont attribuables à un comportement d'utilisateur type.

14. Entité de réseau selon la revendication 13, dans laquelle l'entité de réseau est comprise dans l'un d'un système de gestion de réseau, NMS, (102) et d'un système de support d'exploitation, OSS ; et/ou
dans laquelle l'entité de réseau est une fonction de présentation (1023) comprise dans la fonctionnalité PM.

15. Système (10) comprenant :
un analyseur de support d'accès radio, RAB, (1022) selon la revendication 11 ;
une fonctionnalité de gestion de performance, PM, (1021) selon la revendication 13 ; et
un serveur de gestion de domaine, DMS, (101),
dans lequel l'analyseur de RAB est configuré pour effectuer la recherche d'informations de topologie de réseau comprenant l'au moins un état de l'UeRc et l'au moins une transition vers l'état ou à partir de l'état depuis le DMS, et dans lequel des événements internes ou externes sont envoyés à l'analyseur de RAB directement ou par l'intermédiaire du DMS.
